# FASCICULE DE BREVET EUROPEEN

(11) **EP 2 433 531 B1**
(45) Date de publication et mention de la délivrance du brevet: **28.08.2013**
(21) Numéro de dépôt: 11306213.7
(22) Date de dépôt: 23.09.2011
(51) Int. Cl.: A47J 43/046, A47J 43/07, A47J 43/044

(54) **Dispositif de fixation d'un récipient ou d'un couvercle d'appareil électromenager de préparation culinaire**
Vorrichtung zum Befestigen eines Gefässes oder eines Deckels eines Haushaltsgeräts
Appliance for fixing a receptacle or a lid of a household cooking appliance

(30) Priorité: 24.09.2010 FR 1057721
(43) Date de publication de la demande: 28.03.2012
(73) Titulaire: SEB S.A., 69130 Ecully (FR)
(72) Inventeur: Maunoury, Damien, 53470 Chalons du Maine (FR)
(74) Mandataire: Bourrières, Patrice

(56) Documents cités:
- EP-A1- 2 151 180
- FR-A1- 2 276 800
- US-B1- 6 340 124

## Description

La présente invention concerne le domaine technique général des appareils électroménagers de préparation culinaire tels que les robots ménagers multifonctions.

La présente invention se rapporte plus particulièrement à un dispositif de fixation d'un récipient ou d'un couvercle d'appareil électroménager de préparation culinaire, et à un appareil électroménager de préparation culinaire équipé d'un tel dispositif de fixation.

On connaît de la demande de brevet FR 2 276 800 un robot ménager dans lequel un récipient amovible est immobilisé sur un socle par un dispositif de fixation à baïonnette, le bol comportant une embase munie de tenons s'engageant dans des échancrures du socle.

Un tel dispositif de fixation du récipient présente cependant l'inconvénient de nécessiter une attention particulière de l'utilisateur lorsque ce dernier souhaite engager le bol sur le socle, l'utilisateur étant obligé de chercher du regard l'endroit où se trouvent les tenons pour les amener en face des échancrures. Une telle opération est rendue compliquée par la petite taille des tenons qui les rend peu visibles et par la forme arrondie du bol qui contribue à masquer les tenons. De plus, un tel dispositif de fixation est relativement coûteux à mettre en oeuvre.

Il est connu de la demande de brevet EP 1 520 499, déposée par la demanderesse, de remédier à ces inconvénients en utilisant un bras de liaison de la poignée de préhension pour immobiliser le récipient sur le socle, le bras de liaison s'engageant dans une échancrure réalisée en bordure du socle.

Cependant, une telle solution présente l'inconvénient de nécessiter la réalisation d'une échancrure dans le socle qui peut être difficile à intégrer esthétiquement. De plus, une telle solution n'est pas utilisable avec une poignée démunie de bras de liaison dans sa partie inférieure et impose donc des contraintes sur la forme de la poignée.

L'invention qui suit vise à pallier ces inconvénients en proposant un dispositif de fixation du récipient sur le socle qui soit simple et économique à réaliser et qui procure une grande ergonomie d'utilisation.

Le but de l'invention est atteint par un dispositif de fixation d'un élément amovible, constitué par un récipient ou un couvercle, d'appareil électroménager de préparation culinaire, le dispositif de fixation étant destiné à immobiliser l'élément amovible dans une position de travail sur un support, caractérisé en ce qu'il comporte des moyens de verrouillage à déformation élastique assurant un blocage de l'élément amovible sur le support selon une direction d'immobilisation et en ce que les moyens de verrouillage sont prévus pour se déformer élastiquement et permettre le déverrouillage de l'élément amovible lorsqu'un effort supérieur à un seuil prédéterminé est exercé sur l'élément amovible dans une direction de déverrouillage non parallèle à la direction d'immobilisation.

Selon une autre caractéristique de l'invention, la direction de déverrouillage est perpendiculaire à la direction d'immobilisation.

Selon une autre caractéristique de l'invention, la direction d'immobilisation est axiale à l'élément amovible.

Selon une autre caractéristique de l'invention, les moyens de verrouillage à déformation élastique sont prévus pour se déformer élastiquement lorsque l'élément amovible est engagé axialement sur le support vers la position de travail.

Une telle caractéristique présente l'avantage de permettre la mise en place de l'élément amovible en position de travail sur le support en amenant l'élément amovible directement selon l'orientation angulaire correspondant à la position de travail avant de l'engager sur le support, puis en réalisant un déplacement axial de l'élément amovible sur le support vers la position de travail.

Selon une autre caractéristique de l'invention, le déverrouillage de l'élément amovible s'effectue en tournant l'élément sur le support.

Selon encore une autre caractéristique de l'invention, le support comporte une butée coopérant avec l'élément amovible pour interdire la rotation de l'élément dans une direction opposée à la direction de déverrouillage lorsque l'élément amovible est en position de travail.

Selon encore une autre caractéristique de l'invention, le support comporte des rampes de guidage coopérant avec l'élément amovible pour le soulever du support, après son déverrouillage, lorsque l'élément amovible est tourné dans le sens du déverrouillage.

Selon une autre caractéristique de l'invention, les moyens de verrouillage comprennent au moins une languette de verrouillage à déformation élastique portée par le support, la languette de verrouillage étant munie d'une tête de verrouillage s'introduisant dans un orifice de l'élément amovible lorsque l'élément amovible est placé sur le support dans la position de travail.

Selon encore une autre caractéristique de l'invention, la tête de verrouillage comporte un méplat orienté perpendiculairement à la direction de blocage et des faces latérales inclinées par rapport à la direction de déverrouillage, le méplat venant buter en bordure de l'orifice lorsque la tête de verrouillage est engagée dans l'orifice, la languette de verrouillage étant rigide dans la direction d'immobilisation de l'élément amovible et pouvant se déformer élastiquement dans une direction perpendiculaire à la direction d'immobilisation.

Selon encore une autre caractéristique de l'invention, l'élément amovible est un récipient et le support est un socle.

L'invention concerne également un appareil électroménager de préparation culinaire comportant un socle et un récipient amovible destiné à reposer sur le socle, le récipient recevant un outil de travail entraîné en rotation par un moteur, caractérisé en ce que le récipient est immobilisé dans une position de travail sur le socle au moyen d'un dispositif de fixation tel que précédemment décrit.

Selon encore une autre caractéristique de l'invention, le récipient comporte une poignée de préhension, une languette de verrouillage étant disposée dans l'alignement de la poignée de préhension lorsque le récipient est en position de travail sur le socle.

Selon encore une autre caractéristique de l'invention, le récipient est fermé par un couvercle amovible comportant une patte s'insérant dans une fente ménagée dans un caisson adjacent au récipient.

On comprendra mieux les buts, aspects et avantages de la présente invention d'après la description donnée ci-après d'un mode particulier de réalisation de l'invention présenté à titre d'exemple non limitatif, en se référant aux dessins annexés dans lesquels:
- la figure 1 est une vue générale en perspective d'un robot selon un mode de réalisation particulier de l'invention ;
- la figure 2 est une autre vue en perspective du robot de la figure 1 avec le récipient soulevé du socle et le couvercle en position ouverte ;
- la figure 3 est une vue en perspective du dessous du récipient représenté seul;
- la figure 4 est une autre vue en perspective du boîtier du robot de la figure 1;
- la figure 5 est une vue en perspective, partiellement arrachée, du boîtier du robot avec le récipient disposé en position de travail;
- la figure 6 est une vue en perspective de la languette de verrouillage représentée seule;
- la figure 7 est une vue de dessus du boîtier du robot de la figue 1;
- la figure 8 est une vue de détail en coupe selon la ligne Vlll-Vlll de la figure 7;
- la figure 9 est une vue en coupe du robot selon la ligne lX-lX de la figure 7.

Seuls les éléments nécessaires à la compréhension de l'invention ont été représentés. Pour faciliter la lecture des dessins, les mêmes éléments portent les mêmes références d'une figure à l'autre.

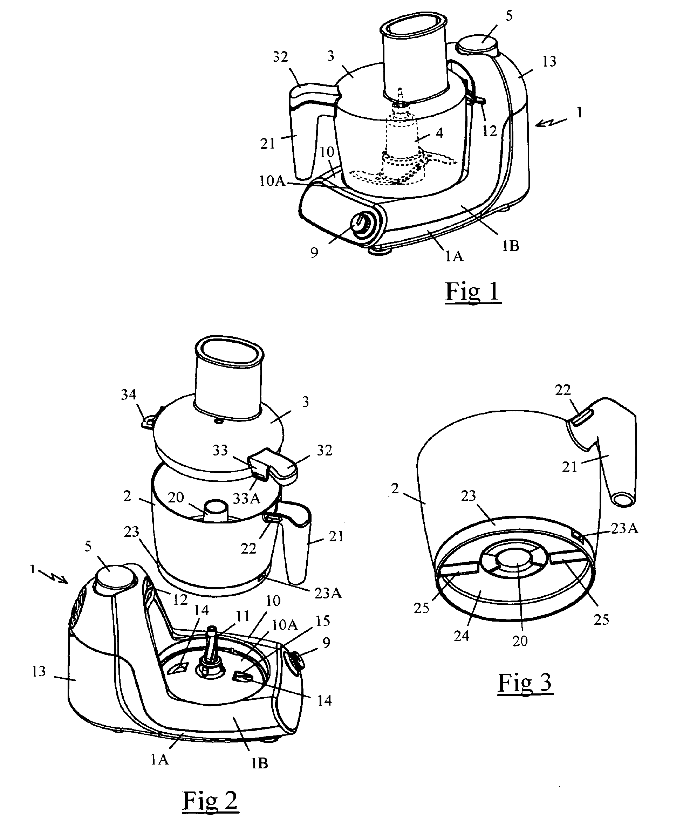

La figure 1 illustre un robot ménager, ou appareil électroménager de préparation culinaire, comprenant un boîtier 1 comportant une coquille inférieure 1A et une coquille supérieure 1 B en matière plastique assemblées l'une sur l'autre par des vis, non représentées sur les figures.

La coquille supérieure 1 B comporte un socle 10 comprenant une face avant munie d'un bouton de commande 9 décalé latéralement vers la droite par rapport à l'axe longitudinal du boîtier 1, le socle 10 comportant une empreinte 10A destinée à recevoir un récipient 2 définissant une enceinte dans laquelle est disposé un outil coupant 4 rotatif, illustré en pointillé sur la figure 1.

Le récipient 2 est monté de manière amovible sur le socle 10 et est destiné à occuper une position de travail, illustrée sur la figure 1, dans laquelle une poignée 21 de préhension du récipient se trouve décalée latéralement vers la gauche par rapport à l'axe longitudinal du boîtier 1, de sorte que le bouton de commande 9 ne soit pas masqué par la poignée 21.

Comme on peut le voir sur la figure 2, le récipient 2 comporte une jupe inférieure 23 s'engageant dans l'empreinte 10A du socle lorsque le récipient 2 est dans une position de travail, l'empreinte 10A comportant un fond convexe en forme de dôme muni d'un entraîneur 11 central venant s'engager dans une cheminée centrale 20 du récipient. L'entraîneur 11 est, de manière connue en soi, entraîné en rotation par un moteur, non représenté sur les figures, disposé dans un caisson 13 s'élevant verticalement en bordure du socle.

Le récipient 2 est fermé par un couvercle 3 amovible comportant une excroissance 32 latérale venant dans l'alignement de la poignée 21 du récipient pour former avec cette dernière un ensemble visuellement monobloc lorsque le couvercle 3 est correctement positionné sur le récipient 2, ainsi que cela est illustré sur la figure 1.

L'excroissance 32 comporte une attache 33 latérale comportant un orifice oblong 33A dans lequel vient s'engager un ergot 22 porté par un coté de la poignée 21 pour constituer un point de fixation entre la poignée 21 et le couvercle 3.

Le couvercle 3 comporte également une patte 34 de verrouillage disposée sensiblement à l'opposé de l'excroissance 32, la patte 34 venant s'insérer dans une fente 12 du caisson 13 lorsque l'excroissance 32 est alignée avec la poignée 21 et que le récipient 2 est disposé en position de travail. De manière préférentielle, la patte 34 de verrouillage est verrouillée dans la fente 12 du caisson 13 par un dispositif de verrouillage, non illustré sur les figures, désactivable au moyen d'un bouton de déverrouillage 5 disposé au sommet du caisson 13.

Conformément à la figure 3, la jupe inférieure 23 du récipient est surmontée d'un fond 24 comprenant une face inférieure comportant deux nervures 25 disposées symétriquement sous le fond 24 du récipient, les deux nervures 25 s'étendent radialement depuis la périphérie intérieure de la jupe inférieure 23 jusqu'à proximité de la cheminée centrale 20.

Ces deux nervures 25 du récipient sont destinées à coopérer avec des rampes de guidage 14 portées par le fond convexe de l'empreinte 10A, pour amener naturellement le récipient 2 vers la position de travail lorsque le récipient 2 est disposé sur le socle 10 en étant légèrement décalé par rapport à la position de travail, préférentiellement de moins de 25°.

A cet effet, les rampes de guidage 14 comportent des surfaces en spirale, creusées dans le fond de l'empreinte 10A, qui descendent en direction d'une paroi verticale formant une butée 15 sur laquelle vient prendre appui une face latérale des nervures 25 lorsque le récipient 2 est en position de travail, les butées 15 empêchant la rotation du récipient 2 dans le sens trigonométrique au-delà de la position de travail. De manière préférentielle, l'engagement des nervures 25 du récipient contre les butées 15 du socle assure un blocage en rotation du récipient 2 dans le sens de rotation de l'outil de travail 4 de sorte que les butées 15 s'opposent à la rotation du récipient 2 sous l'effet du couple exercé par le frottement des aliments sur le récipient 2 lors de la rotation de l'outil 4.

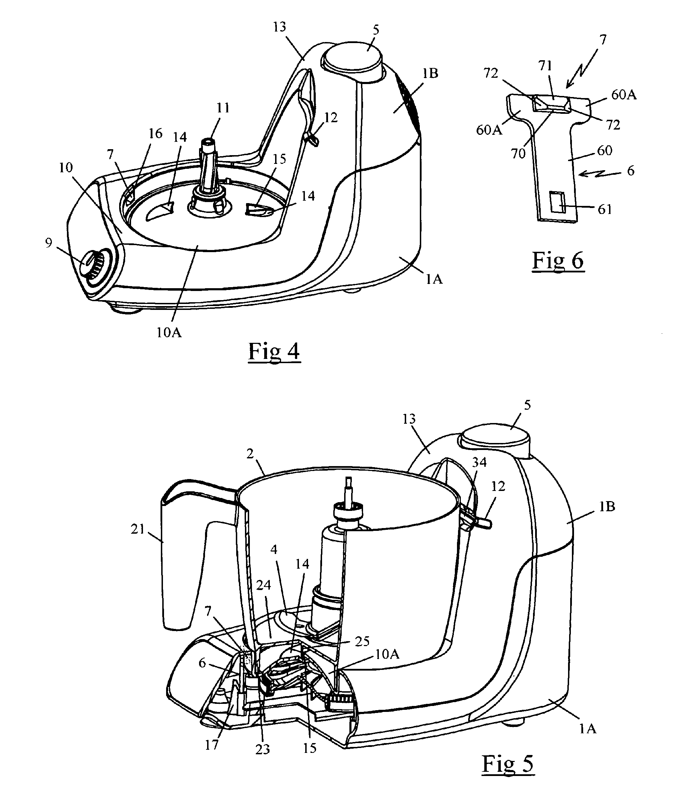

Plus particulièrement selon l'invention, et conformément aux figures 4 et 5, le récipient est immobilisé dans la position de travail par un dispositif de fixation comprenant une languette de verrouillage 6 à déformation élastique comportant une tête de verrouillage 7 faisant saillie au travers d'une ouverture 16 de la paroi périphérique de l'empreinte 10A pour venir s'insérer, lorsque le récipient 2 est en position de travail, dans un orifice 23A de la jupe inférieure, visible sur les figures 2 et 3, préférentiellement disposé dans l'alignement de la poignée 21.

De manière avantageuse, la languette de verrouillage 6 comporte un corps allongé 60 en matière plastique s'étendant verticalement dans le boîtier 1, la languette de verrouillage 6 comprenant une extrémité inférieure qui est emmanchée dans un plot de fixation 17 porté par la coquille inférieure 1A et une extrémité supérieure, en porte-à-faux à l'extérieur du plot de fixation 17, supportant la tête de verrouillage 7.

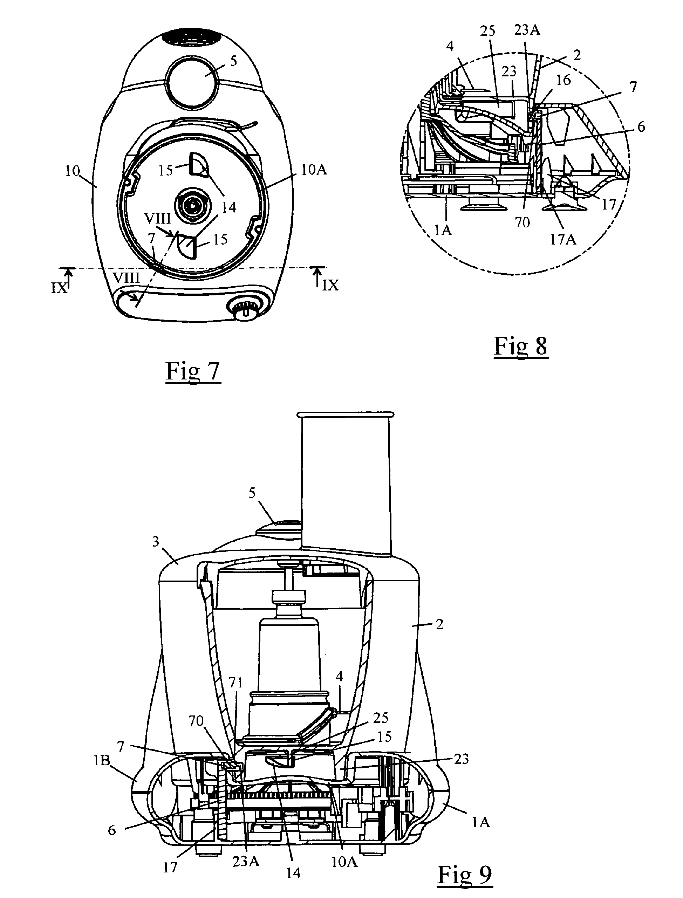

Comme on peut le voir sur la figure 6, qui représente isolément la languette de verrouillage 6, l'extrémité inférieure de la languette comporte une ouverture 61 dans laquelle vient s'engager un ergot de blocage 17A, visible sur la figure 8, porté par le plot de fixation 17 et l'extrémité supérieure de la languette de verrouillage 6 comprend une face latérale, en forme de T, qui supporte la tête de verrouillage 7, la languette de verrouillage 6 comprenant des oreilles 60A s'étendant latéralement de part et d'autre de la tête de verrouillage 7 pour venir prendre appui en bordure de l'ouverture 16 de la paroi périphérique de l'empreinte 10A.

De manière préférentielle, la tête de verrouillage 7 fait saillie sur la face latérale du corps allongé 60 de la languette de verrouillage et comporte une face inférieure plate formant un méplat 70 s'étendant perpendiculairement à la direction longitudinale du corps 60 de la languette de verrouillage. La tête de verrouillage 7 comporte également une face supérieure 71 et des faces latérales 72 obliques convergeant vers une extrémité effilée de la tête de verrouillage 7 de sorte que la tête de verrouillage présente une forme pyramidale, tronquée dans sa moitié inférieure, s'étendant perpendiculairement au corps allongé 60 de la languette de verrouillage.

Le dispositif de fixation ainsi réalisé présente l'avantage d'être simple et économique à réaliser et procure une grande ergonomie d'utilisation en permettant une mise en place et un retrait aisé du récipient 2 en position de travail sur le socle 10.

En effet, pour amener le récipient 2 en position de travail sur le socle 10, l'utilisateur peut saisir le récipient 2 par sa poignée 21 et l'orienter de telle sorte que la poignée 21 se trouve disposée à gauche de la tête de verrouillage 7, c'est-à-dire dans une position dans laquelle les nervures 25 portées par le fond 24 du récipient se trouvent du côté des rampes de guidage 14 portées par le fond de l'empreinte 10A par rapport aux butées 15. De manière avantageuse, le socle 10 pourra comporter des marquages, non représentés sur les figures, informant l'utilisateur sur la position dans laquelle la poignée 21 du récipient doit être amenée pour permettre le verrouillage du récipient 2 sur le socle 10.

Lorsque le récipient 2 est placé sur le socle 10 en engageant la jupe inférieure 23 dans l'empreinte 10A du socle, la jupe inférieure 23 vient au contact de la face supérieure 71 oblique de la tête de verrouillage 7 et repousse la tête de verrouillage 7 à l'intérieur de l'ouverture 16, en engendrant une déformation élastique de la languette de verrouillage 6.

Si le récipient 2 est présenté de telle sorte que les nervures 25 du fond du récipient reposent, en dehors des rampes de guidage 14, directement sur la surface en forme de dôme du fond de l'empreinte 10A, alors le récipient 2 va se trouver dans une position surélevée et instable sur le socle 10, incitant l'utilisateur à tourner la poignée 21 du récipient pour amener le récipient 2 dans un position plus stable, c'est-à-dire à amener les nervures 25 sur les rampes de guidage 14.

Une fois les nervures 25 engagées sur les rampes de guidage 14, les nervures 25 vont glisser le long des rampes de guidage 14, sous l'effet du poids du récipient 2, de sorte que le récipient 2 va tourner dans le sens trigonométrique jusqu'à la position de travail dans laquelle les nervures 25 se trouvent en appui contre les butées 15. Lors de cette rotation vers la position de travail, la tête de verrouillage 7 de la languette de verrouillage 6 se trouve repoussée à l'intérieur de l'ouverture 16 par la jupe inférieure 23 jusqu'à ce que l'orifice 23A se trouve en regard de la tête de verrouillage 7, c'est-à-dire jusqu'à ce que le récipient 2 occupe la position de travail.

Bien entendu, l'utilisateur peut également amener le récipient 2 sur le socle 10 en l'orientant directement selon la position de travail et en appuyant verticalement sur le récipient 2 de manière à ce que la tête de verrouillage 7 soit dans un premier temps repoussée par la jupe inférieure 23, grâce à l'interaction entre le bord de la jupe inférieure 23 et la face supérieure 71 oblique de la tête de verrouillage 7, puis dans un second temps s'engage directement dans l'orifice 23A.

Lorsque la tête de verrouillage 7 est engagée dans l'orifice 23A, ainsi que cela est illustré sur les figures 7 et 8, le méplat 70 de la tête de verrouillage 7 vient buter contre le bord de l'orifice 23A pour former un premier point d'ancrage empêchant tout soulèvement du récipient 2 par rapport au socle 10. Le couvercle 3 du récipient peut alors être fermé en amenant la patte 34 de verrouillage dans la fente 12 de manière à ce que la patte 34 de verrouillage constitue un second point d'ancrage, sensiblement à l'opposé de la languette de verrouillage 6, qui immobilise le couvercle 3 sur le récipient 2 et empêche également le soulèvement du récipient 2 par rapport au socle 10.

On obtient ainsi un verrouillage sécuritaire du récipient 2 sur le socle 10, le récipient 2 ne pouvant pas être soulevé de son socle 10 sans avoir retiré au préalable le couvercle 3.

Lorsque l'utilisateur souhaite retirer le couvercle 3, il lui suffit d'appuyer sur le bouton de déverrouillage 5 pour que la patte 34 de verrouillage soit extraite de la fente 12 du caisson par rotation.

L'utilisateur peut alors déverrouiller le récipient 2 du socle 10 en faisant tourner le récipient 2 sur le socle 10 dans le sens horaire de manière à ce que la face latérale 72 oblique de la tête de verrouillage 7 vienne en appui contre le bord de l'orifice 23A et génèrent une force repoussant la tête de verrouillage 7 vers l'intérieur du socle 10, en générant une déformation élastique du corps allongé 60 de la languette de verrouillage 6. La tête de verrouillage 7 se trouve alors désengagée de l'orifice 23A, en reposant contre la jupe inférieure 23 du récipient 2, et la poursuite du mouvement de rotation du récipient 2 permet d'obtenir un soulèvement du récipient 2 grâce à l'appui des nervures 25 sur les rampes de guidage 14 qui tendent à soulever le récipient 2 lorsque ce dernier est tourné dans le sens horaire.

On obtient ainsi un dispositif de fixation procurant une grande ergonomie d'utilisation qui est très simple et économique à mettre en oeuvre. De plus, le dispositif de fixation ainsi réalisé présente l'avantage d'être peu encombrant et très discret.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation non représentée, le dispositif de fixation pourra également être utilisé pour assurer l'immobilisation du couvercle sur le récipient en disposant simplement une ou plusieurs languettes élastiques à proximité du bord supérieur du récipient venant s'engager dans un ou plusieurs orifices portés par une jupe du couvercle.

Ainsi, dans une variante de réalisation non représentée, la languette de verrouillage pourra être portée par le récipient et coopérer avec un orifice porté par le socle.

## Revendications

1. Dispositif de fixation d'un élément (2) amovible, constitué par un récipient ou un couvercle, d'appareil électroménager de préparation culinaire, ledit dispositif de fixation étant destiné à immobiliser l'élément (2) amovible dans une position de travail sur un support (10) et comportant des moyens de verrouillage (6, 7) à déformation élastique assurant un blocage de l'élément (2) amovible sur le support (10) selon une direction d'immobilisation, **caractérisé en ce que** lesdits moyens de verrouillage (6, 7) sont prévus pour se déformer élastiquement et permettre le déverrouillage de l'élément (2) amovible lorsqu'un effort supérieur à un seuil prédéterminé est exercé sur l'élément (2) amovible dans une direction de déverrouillage non parallèle à la direction d'immobilisation.

2. Dispositif de fixation d'un élément (2) amovible d'appareil électroménager selon la revendication 1, **caractérisé en ce que** la direction de déverrouillage est perpendiculaire à la direction d'immobilisation.

3. Dispositif de fixation d'un élément (2) amovible d'appareil électroménager selon l'une quelconque des revendications 1 à 2, **caractérisé en ce que** la direction d'immobilisation est axiale à l'élément (2) amovible.

4. Dispositif de fixation d'un élément (2) amovible d'appareil électroménager selon la revendication 3, **caractérisé en ce que** les moyens de verrouillage (6, 7) à déformation élastique sont prévus pour se déformer élastiquement lorsque l'élément (2) amovible est engagé axialement sur le support (10) vers la position de travail.

5. Dispositif de fixation d'un élément (2) amovible d'appareil électroménager selon l'une quelconque des revendications 3 à 4, **caractérisé en ce que** le déverrouillage de l'élément (2) amovible s'effectue en tournant l'élément (2) sur le support (10).

6. Dispositif de fixation d'un élément (2) amovible d'appareil électroménager selon la revendication 5, **caractérisé en ce que** le support (10) comporte une butée (15) coopérant avec l'élément (2) amovible pour interdire la rotation de l'élément (2) dans une direction opposée à la direction de déverrouillage lorsque l'élément (2) amovible est en position de travail.

7. Dispositif de fixation d'un élément (2) amovible d'appareil électroménager selon l'une quelconque des revendications 5 ou 6, **caractérisé en ce que** le support (10) comporte des rampes de guidage (14) coopérant avec l'élément (2) amovible pour le soulever du support (10), après son déverrouillage, lorsque l'élément (2) amovible est tourné dans le sens du déverrouillage.

8. Dispositif de fixation d'un élément (2) amovible d'appareil électroménager selon l'une quelconque des revendications 1 à 7, **caractérisé en ce que** les moyens de verrouillage comprennent au moins une languette de verrouillage (6) à déformation élastique portée par le support (10), ladite languette de verrouillage (6) étant munie d'une tête de verrouillage (7) s'introduisant dans un orifice (23A) de l'élément amovible lorsque l'élément (2) amovible est placé sur le support (10) dans la position de travail.

9. Dispositif de fixation d'un élément (2) amovible d'appareil électroménager selon la revendication 8, **caractérisé en ce que** la tête de verrouillage (7) comporte un méplat (70) orienté perpendiculairement à la direction de blocage et des faces latérales (72) inclinées par rapport à la direction de déverrouillage, le méplat (70) venant buter en bordure de l'orifice (23A) lorsque la tête de verrouillage (7) est engagée dans l'orifice (23A), ladite languette de verrouillage (6) étant rigide dans la direction d'immobilisation de l'élément (2) amovible et pouvant se déformer élastiquement dans une direction perpendiculaire à la direction d'immobilisation.

10. Dispositif de fixation d'un élément (2) amovible d'appareil électroménager selon l'une quelconque des revendications 1 à 9, **caractérisé en ce que** l'élément amovible est un récipient (2) et le support est un socle (10).

11. Appareil électroménager de préparation culinaire comportant un socle (10) et un récipient (2) amovible destiné à reposer sur le socle (10), le récipient (2) recevant un outil de travail (4) entraîné en rotation par un moteur, **caractérisé en ce que** le récipient (2) est immobilisé dans une position de travail sur le socle (10) au moyen d'un dispositif de fixation selon la revendication 10.

12. Appareil électroménager de préparation culinaire selon la revendication 11, **caractérisé en ce que** le récipient (2) comporte une poignée (21) de préhension et **en ce qu'**une languette de verrouillage (6) est disposée dans l'alignement de la poignée (21) de préhension lorsque le récipient (2) est en position de travail sur le socle (10).

13. Appareil électroménager de préparation culinaire selon l'une quelconque des revendications 11 à 12, **caractérisé en ce que** le récipient (2) est fermé par un couvercle (3) amovible comportant une patte (34) s'insérant dans une fente (12) ménagée dans un caisson (13) adjacent au récipient (2).

## Patentansprüche

1. Befestigungsvorrichtung für ein abnehmbares Element (2), das von einem Behälter oder Deckel eines Elektrohaushaltsgerätes für kulinarische Zubereitungen gebildet wird, wobei die Befestigungsvorrichtung dazu bestimmt ist, das abnehmbare Element (2) in einer Arbeitsposition auf einer Auflage (10) zu arretieren, und Verriegelungsmittel (6, 7) mit elastischer Verformung umfasst, die eine Blockierung des abnehmbaren Elements (2) auf der Auflage (10) gemäß einer Arretierungsrichtung sicherstellen, **dadurch gekennzeichnet, dass** die Verriegelungsmittel (6, 7) vorgesehen sind, um sich elastisch zu verformen und um die Entriegelung des abnehmbaren Elements (2) zu ermöglichen, wenn auf das abnehmbare Element (2) in eine Entriegelungsrichtung, die nicht parallel zur Arretierungsrichtung verläuft, eine Kraft ausgeübt wird, die größer ist als ein vorausbestimmter Grenzwert.

2. Befestigungsvorrichtung für ein abnehmbares Element (2) eines Elektrohaushaltsgerätes nach Anspruch 1, **dadurch gekennzeichnet, dass** die Entriegelungsrichtung senkrecht zur Arretierungsrichtung verläuft.

3. Befestigungsvorrichtung für ein abnehmbares Element (2) eines Elektrohaushaltsgerätes nach einem der Ansprüche 1 bis 2, **dadurch gekennzeichnet, dass** die Arretierungsrichtung axial zum abnehmbaren Element (2) verläuft.

4. Befestigungsvorrichtung für ein abnehmbares Element (2) eines Elektrohaushaltsgerätes nach Anspruch 3, **dadurch gekennzeichnet, dass** die Verriegelungsmittel (6, 7) mit elastischer Verformung vorgesehen sind, um sich elastisch zu verformen, wenn das abnehmbare Element (2) axial auf die Auflage (10) in die Arbeitposition aufgesetzt wird.

5. Befestigungsvorrichtung für ein abnehmbares Element (2) eines Elektrohaushaltsgerätes nach einem der Ansprüche 3 bis 4, **dadurch gekennzeichnet, dass** die Entriegelung des abnehmbaren Elements (2) durch Drehen des Elements (2) auf der Auflage (10) erfolgt.

6. Befestigungsvorrichtung für ein abnehmbares Element (2) eines Elektrohaushaltsgerätes nach Anspruch 5, **dadurch gekennzeichnet, dass** die Auflage (10) einen Anschlag (15) umfasst, der mit dem abnehmbaren Element (2) zusammenwirkt, um die Drehung des Elements (2) in eine der Entriegelungsrichtung entgegengesetzte Richtung zu unterbinden, wenn sich das abnehmbare Element (2) in Arbeitsposition befindet.

7. Befestigungsvorrichtung für ein abnehmbares Element (2) eines Elektrohaushaltsgerätes nach einem der Ansprüche 5 oder 6, **dadurch gekennzeichnet, dass** die Auflage (10) Führungsrampen (14) umfasst, die mit dem abnehmbaren Element (2) zusammenwirken, um es von der Auflage (10) nach seiner Entriegelung anzuheben, wenn das abnehmbare Element (2) in Entriegelungsrichtung gedreht wird.

8. Befestigungsvorrichtung für ein abnehmbares Element (2) eines Elektrohaushaltsgerätes nach einem der Ansprüche 1 bis 7, **dadurch gekennzeichnet, dass** die Verriegelungsmittel wenigstens eine Verriegelungslasche (6) mit elastischer Verformung umfassen, die von der Auflage (10) getragen wird, wobei die Verriegelungslasche (6) mit einem Verriegelungskopf (7) versehen ist, der sich in eine Öffnung (23A) des abnehmbaren Elements einfügt, wenn das abnehmbare Element (2) auf die Auflage (10) in die Arbeitsposition aufgesetzt wird.

9. Befestigungsvorrichtung für ein abnehmbares Element (2) eines Elektrohaushaltsgerätes nach Anspruch 8, **dadurch gekennzeichnet, dass** der Verriegelungskopf (7) eine Abflachung (70), die senkrecht zur Arretierungsrichtung ausgerichtet ist, und Seitenflächen (72) umfasst, die in Bezug auf die Entriegelungsrichtung geneigt sind, wobei die Abflachung (70) am Rand der Öffnung (23A) anschlägt, wenn der Verriegelungskopf (7) in die Öffnung (23A) eingefügt wird, wobei die Verriegelungslasche (6) in die Arretierungsrichtung des abnehmbaren Elements (2) starr ist und sich in eine zur Arretierungsrichtung senkrechte Richtung elastisch verformen kann.

10. Befestigungsvorrichtung für ein abnehmbares Element (2) eines Elektrohaushaltsgerätes nach einem der Ansprüche 1 bis 9, **dadurch gekennzeichnet, dass** das abnehmbare Element ein Behälter (2) und die Auflage ein Sockel (10) ist.

11. Elektrohaushaltsgerät für kulinarische Zubereitungen, umfassend einen Sockel (10) und einen abnehmbaren Behälter (2), der dazu bestimmt ist, auf dem Sockel (10) aufzuliegen, wobei der Behälter (2) ein Arbeitswerkzeug (4) aufnimmt, das von einem Motor in Drehung versetzt wird, **dadurch gekennzeichnet, dass** der Behälter (2) in einer Arbeitsposition auf dem Sockel (10) mithilfe einer Befestigungsvorrichtung nach Anspruch 10 arretiert wird.

12. Elektrohaushaltsgerät für kulinarische Zubereitungen nach Anspruch 11, **dadurch gekennzeichnet, dass** der Behälter (2) einen Griff (21) zum Erfassen umfasst und dadurch, dass eine Verriegelungslasche (6) in einer Fluchtlinie mit dem Griff (21) zum Erfassen angeordnet ist, wenn sich der Behälter (2) in Arbeitsposition auf dem Sockel (10) befindet.

13. Elektrohaushaltsgerät für kulinarische Zubereitungen nach einem der Ansprüche 11 bis 12, **dadurch gekennzeichnet, dass** der Behälter (2) von einem abnehmbaren Deckel (3) verschlossen wird, der eine Nase (34) umfasst, die sich in einen Schlitz (12) einfügt, der in einem Gehäuse (13) angrenzend zum Behälter (2) ausgebildet ist.

## Claims

1. A device for fixing a removable element (2), consisting of a container or a lid, of a household cooking appliance, said fixing device being intended to immobilise the removable element (2) in a working position on a support (10) and comprising elastically deformable locking means (6, 7) which lock the removable element (2) on the support (10) in an immobilisation direction, **characterised in that** said locking means (6, 7) are designed so as to deform elastically and allow the unlocking of the removable element (2) when a force higher than a predetermined threshold is exerted on the removable element (2) in an unlocking direction that is not parallel to the immobilisation direction.

2. A device for fixing a removable element (2) of a household cooking appliance according to claim 1, **characterised in that** the unlocking direction is perpendicular to the immobilisation direction.

3. A device for fixing a removable element (2) of a household cooking appliance according to any one of claims 1 to 2, **characterised in that** the immobilisation direction is axial to the removable element (2).

4. A device for fixing a removable element (2) of a household cooking appliance according to claim 3, **characterised in that** the electrically deformable locking means (6, 7) are designed to deform elastically when the removable element (2) is axially engaged on the support (10) towards the working position.

5. A device for fixing a removable element (2) of a household cooking appliance according to any one of claims 3 to 4, **characterised in that** the removable element (2) is unlocked by rotating the element (2) on the support (10).

6. A device for fixing a removable element (2) of a household cooking appliance according to claim 5, **characterised in that** the support (10) comprises a stop (15) cooperating with the removable element (2) to prevent the rotation of the element (2) in a direction opposite to the unlocking direction when the removable element (2) is in working position.

7. A device for fixing a removable element (2) of a household cooking appliance according to any one of claims 5 or 6, **characterised in that** the support (10) comprises guide ramps (14) cooperating with the removable element (2) to lift it from the support (10), after it is unlocked, when the removable element (2) is rotated in the unlocking direction.

8. A device for fixing a removable element (2) of a household cooking appliance according to any one of claims 1 to 7, **characterised in that** the locking means comprise at least one elastically deformable locking tab (6) carried by the support (10), said locking tab (6) being provided with a locking head (7) to be inserted into an orifice (23A) of the removable element when the removable element (2) is placed on the support (10) in the working position.

9. A device for fixing a removable element (2) of a household cooking appliance according to any claim 8, **characterised in that** the locking head (7) comprises a flat surface (70) oriented perpendicular to the locking direction and side faces (72) inclined with respect to the unlocking direction, the flat surface (70) abutting the edge of the orifice (23A) when the locking head (7) is engaged in the orifice (23A), said locking tab (6) being rigid in the immobilisation direction of the removable element (2) and being elastically deformable in a direction perpendicular to the immobilisation direction.

10. A device for fixing a removable element (2) of a household cooking appliance according to any one of claims 1 to 9, **characterised in that** the removable element is a container (2) and the support is a base (10).

11. A household cooking appliance comprising a base (10) and a removable container (2) designed to be placed on the base (10), the container (2) receiving a working tool (4) driven in rotation by a motor, **characterised in that** the container (2) is immobilised in a working position on the base (10) by means of a fixing device according to claim 10.

12. A household cooking appliance according to claim 11, **characterised in that** the container (2) comprises a gripping handle (21) and **in that** a locking tab (6) is arranged in alignment with the gripping handle (21) when the container (2) is in working position on the base (10).

13. A household cooking appliance according to any one of claims 11 to 12, **characterised in that** the container (2) is closed by a removable lid (3) containing a tab (34) being inserted into a slot (12) provided in a housing (13) adjacent to the container (2).
